# EUROPEAN PATENT APPLICATION

(11) **EP 4 807 826 A1**
(43) Date of publication of application: **16.09.2026**
(21) Application number: 24887657.5
(22) Date of filing: 24.09.2024
(51) Int. Cl.: H01M 10/04, H01M 10/42, H01M 50/50, B60L 50/64, H02J 7/00, H01M 50/249

(54) **BATTERY PACK AND VEHICLE COMPRISING SAME**

(30) Priority: 09.11.2023 CN 202323038276 U; 27.02.2024 CN 202420368428 U
(71) Applicant: BYD Company Limited, Shenzhen, Guangdong 518118 (CN)
(72) Inventor: KE, Huan, Shenzhen, Guangdong 518118 (CN); ZHANG, Chengjun, Shenzhen, Guangdong 518118 (CN); CHEN, Junyu, Shenzhen, Guangdong 518118 (CN); GONG, Xubin, Shenzhen, Guangdong 518118 (CN); SUN, Shiyan, Shenzhen, Guangdong 518118 (CN)
(74) Representative: Mathys & Squire
(86) International application number: PCT/CN2024/120619
(87) International publication number: WO 2025/098039

(57) **Abstract**

Provided are a battery pack and a vehicle having the same. The battery pack (100) includes: a plurality of battery groups (1), the plurality of battery groups (1) being stacked in a first direction, and each battery group (1) including a plurality of cells (111); and a BDU module (2), the BDU module (2) being disposed on a side of the plurality of battery groups (1) in a second direction. In two adjacent battery groups (1), a total current input terminal (12) of one battery group (1) and a total current output terminal (13) of the other battery group (1) are both connected to the BDU module (2), and the second direction is perpendicular to the first direction.

## Description

### CROSS-REFERENCE TO RELATED APPLICATIONS

This application is based on and claims priorities to Chinese Patent Applications No. 202323038276.2 and No. 202420368428.0, filed on November 9, 2023 and February 27, 2024, respectively, which are incorporated herein by reference in their entireties.

### TECHNICAL FIELD

This application relates to the field of vehicle technology, and in particular, to a battery pack and a vehicle having the same.

### BACKGROUND

In related technologies, as the popularity of electric vehicles increases, people have increasingly high requirements on driving range of the electric vehicles, and existing battery packs cannot meet the requirements of users. To meet the increasing requirements for extended range, battery groups are stacked in the battery pack in the related technologies to increase capacity. However, space for a high-voltage connection within the stacked battery pack is small, and high-voltage circuit bridging structures are complex, posing potential safety hazards.

### SUMMARY

To address the problem of complex high-voltage connection structures in a stacked battery pack in the conventional technologies , this application proposes a battery pack.

This application further proposes a vehicle that includes the foregoing battery pack.

The battery pack according to this embodiment of this application includes: a plurality of battery groups, the plurality of battery groups being stacked in a first direction, and each battery group including a plurality of cells; and a BDU module, the BDU module being disposed on a side of the plurality of battery groups in a second direction, where in two adjacent battery groups, a total current input terminal of one battery group and a total current output terminal of the other battery group are both connected to the BDU module, and the second direction is perpendicular to the first direction.

According to the battery pack in this embodiment of this application, the plurality of battery groups are stacked in the first direction, and two adjacent battery groups are connected through the BDU module. In this case, a quantity of cells in the battery pack may be increased, to allow the cells to be arranged more compactly in the battery pack, improve space utilization of the battery pack in the first direction, and increase energy density of the battery pack, thereby increasing driving range to meet use requirements of users. In addition, this can meet a power requirement while allowing the stacked multi-layer battery groups to be connected to each other in the BDU module, thereby simplifying the high-voltage connection structure of the stacked battery pack and improving safety of the battery pack.

In addition, the battery pack according to this application may also have the following additional technical features:

In some embodiments, the two adjacent battery groups are connected in series through the BDU module; or the two adjacent battery groups are connected in parallel through the BDU module.

In some embodiments, each battery group includes a plurality of cell groups spaced apart along a third direction, each cell group includes a plurality of cells arranged in the second direction, and the third direction, the second direction and the first direction are perpendicular to each other.

In some embodiments, the plurality of cells in each cell group are connected in series, and a plurality of cell groups in a same battery group are connected in series.

In some embodiments, each cell has a positive electrode and a negative electrode respectively arranged at both ends of the cell in the third direction, and positive electrodes of two adjacent cells in a same cell group are opposite to each other in the third direction.

In some embodiments, each cell has a positive electrode and a negative electrode respectively arranged at both ends of the cell in the third direction. Two adjacent cell groups in the same battery group are respectively a first cell group and a second cell group. A cell of the first cell group and a cell of the second cell group that are opposite to each other in the third direction are respectively a first cell and a second cell, and positive electrodes of the first cell and the second cell are opposite to each other in the third direction.

In some embodiments, two adjacent cell groups in the same battery group are connected through a first connection busbar.

In some embodiments, the first connection busbar is located on a side of the battery group that is away from the BDU module, first connection busbars corresponding to the plurality of battery groups extend in a same direction, two ends of the first connection busbars in a length direction are flush with each other, and the first connection busbars are oppositely arranged in the first direction.

In some embodiments, a total current input terminal and a total current output terminal of each battery group are both located at one end of the battery group that is close to the BDU module.

In some embodiments, the battery pack further includes a rear drive high-voltage port. The rear drive high-voltage port is provided on a side of the plurality of battery groups that is away from the BDU module, and is connected to the BDU module through a second connection busbar.

In some embodiments, projections of the first connection busbar and the second connection busbar onto a plane perpendicular to the first direction do not intersect with each other.

In some embodiments, the battery pack further includes an acquisition circuit board. There are a plurality of acquisition circuit boards, and each cell group corresponds to at least one acquisition circuit board. Each battery group includes two cell groups, and a plurality of acquisition circuit boards corresponding to the same battery group are respectively located on sides of the two cell groups that are away from each other.

In some embodiments, the cells of the plurality of battery groups are arranged in a same layout.

In some embodiments, the BDU module includes a relay protection module. In two adjacent vehicle battery groups, a total current input terminal of one a vehicle battery group and a total current output terminal of the other a vehicle battery group are both connected to the relay protection module, to allow the two adjacent battery groups to be connected to or disconnected from each other through the relay protection module.

In some embodiments, the BDU module has a switch apparatus. In two adjacent battery groups, a total current input terminal of one battery group and a total current output terminal of the other battery group are both connected to the switch apparatus, to allow the two adjacent battery groups to be connected to or disconnected from each other through the switch apparatus.

This application further proposes a vehicle having the battery pack described in the foregoing embodiments.

According to the vehicle in this embodiment of this application, the foregoing battery pack is provided, a plurality of battery groups are stacked in a first direction, and two adjacent battery groups are connected through a BDU module. This can meet a power requirement while allowing the stacked multi-layer battery groups to be connected to each other in the BDU module, thereby simplifying a high-voltage connection structure of the stacked battery pack and improving safety of the battery pack.

Additional aspects and advantages of this application are set forth in part described in the following descriptions, and in part become apparent in the following descriptions or are learned through practice of this application.

### BRIEF DESCRIPTION OF DRAWINGS

The above and/or additional aspects and advantages of this application become apparent and easily understood in the following descriptions of embodiments with reference to the accompanying drawings:
FIG. 1 is a three-dimensional diagram of a battery pack from a first angle according to an embodiment of this application;
FIG. 2 is a three-dimensional diagram of a battery pack from a second angle according to an embodiment of this application, without showing a BDU module;
FIG. 3 is a three-dimensional diagram of a battery pack from a third angle according to an embodiment of this application, without showing a BDU module;
FIG. 4 is a diagram of a circuit of a battery pack according to an embodiment of this application; and
FIG. 5 is a diagram of connection between a battery group of a battery pack and a BDU module according to an embodiment of this application.

### Reference numeral:

100: battery pack;
1: battery group; 11: cell group; 111: cell; 12: total current input terminal; 121: first total current input terminal; 122: second total current input terminal; 13: total current output terminal; 131: first total current output terminal; 132: second total current output terminal; 14: first connection busbar; 15: second connection busbar; 16: connecting sheet; 17: first battery group; 18: second battery group;
2: BDU module;
3: rear drive high-voltage port;
4: acquisition circuit board.

### DESCRIPTION OF EMBODIMENTS

The following describes embodiments of this application in detail. Examples of embodiments are shown in the accompanying drawings. Same or similar reference numerals always represent same or similar elements or elements having same or similar functions. The following embodiments described with reference to the accompanying drawings are examples, and are merely intended to explain this application, but will not be construed as a limitation on this application.

In the descriptions of this application, it will be understood that an orientation or a position relationship indicated by the term "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", or the like is an orientation or a position relationship shown in the accompanying drawings, and is merely intended to facilitate the descriptions and simplify the descriptions of this application, but is not intended to indicate or imply that a specified apparatus or element needs to have a specific orientation, be constructed in a specific orientation, and operate in a specific orientation. Therefore, such terms cannot be construed as a limitation on this application.

Further, the terms "first" and "second" are merely intended for a purpose of description and will not be construed as an indication or implication of relative importance or implicit indication of a quantity of indicated technical features. Therefore, a feature limited by "first" or "second" may explicitly or implicitly include one or more features. In the descriptions of this application, unless otherwise specifically limited, "a plurality of" means two or more.

In this application, unless otherwise clearly specified and defined, the terms "mount", "interconnect", "connect" and "fasten", and the like will be understood in a broad sense. For example, the terms may indicate a fastened connection, a detachable connection, or integration; or may be a mechanical connection, an electrical connection, or a communication connection; or may be a direct connection, may be an indirect connection through an intermediate medium, or may be internal communication of two elements or an interaction relationship between two elements. A person of ordinary skill in the art may understand specific meanings of the foregoing terms in this application based on a specific case.

With reference to the accompanying drawings, the following describes a battery pack 100 according to an embodiment of this application.

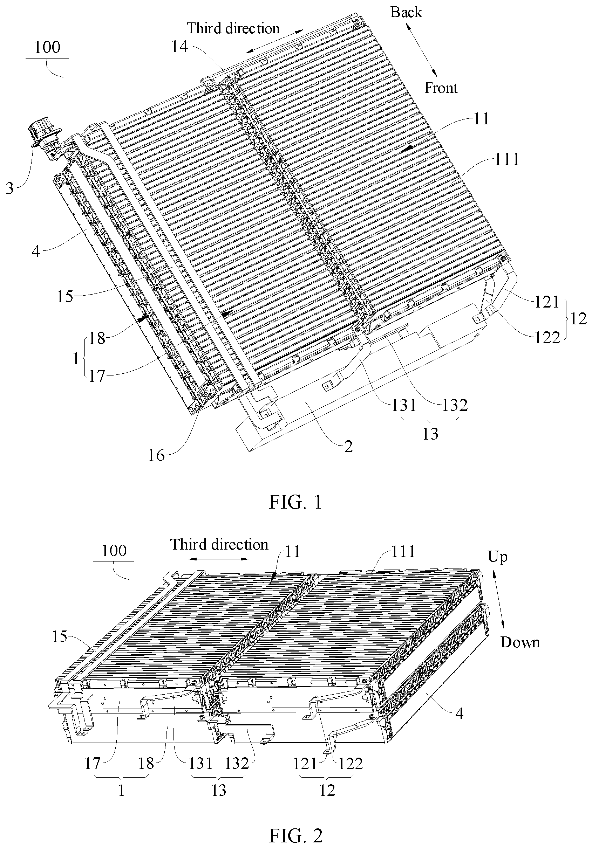

As shown in FIG. 1, the battery pack 100 according to this embodiment of this application includes a plurality of battery groups 1 and a BDU module 2.

Specifically, referring to FIG. 1, the plurality of battery groups 1 are stacked in a first direction (referring to an up-down direction shown in FIG. 2). Each battery group 1 includes a plurality of cells 111. A BDU module 2 (battery energy distribution unit) is disposed on a side of the plurality of battery groups 1 in a second direction (referring to a front-back direction shown in FIG. 1). In two adjacent battery groups 1 in the first direction, a total current input terminal 12 of one battery group 1 and a total current output terminal 13 of the other battery group 1 are both connected to the BDU module 2. The second direction is perpendicular to the first direction.

It will be understood that the plurality of battery groups 1 are stacked in the first direction, and two adjacent battery groups 1 are connected through the BDU module 2. In this case, a quantity of cells 111 in the battery pack 100 may be increased, to allow the cells 111 to be arranged more compactly in the battery pack 100, improve space utilization of the battery pack 100 in the first direction, and increase an energy density of the battery pack 100, thereby increasing driving range to meet use requirements of users. In addition, this can meet a power requirement while allowing the stacked multi-layer battery groups 1 to be connected to each other through the BDU module 2, thereby simplifying a high-voltage connection structure of the stacked battery pack 100 and improving safety of the battery pack 100.

In this embodiment of this application, in two adjacent battery groups 1, a total current input terminal 12 of one battery group 1 and a total current output terminal 13 of the other battery group 1 may be directly connected through a conductive busbar outside the BDU module 2, without a need for passing through the BDU module 2, which can reduce assembly difficulty of the battery pack 100.

For example, a quantity of battery groups 1 may be two, three, or four, and the quantity of cells 111 in each battery group 1 may be four, eight, twelve, sixteen, or twenty.

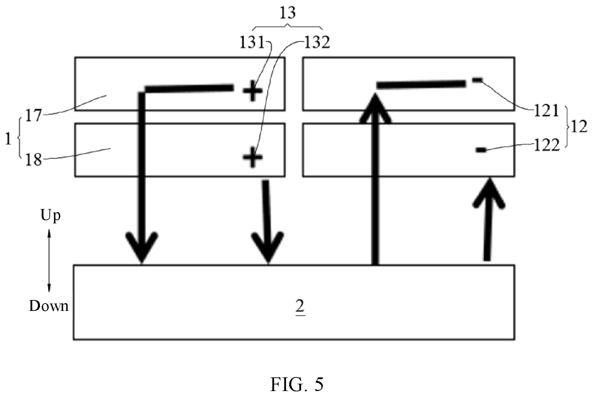

In a specific example, referring to FIG. 1, there are two battery groups 1: a first battery group 17 and a second battery group 18. The first battery group 17 and the second battery group 18 are stacked in the up-down direction (as shown in FIG. 5), and the first battery group 17 is located above the second battery group 18. A total current input terminal 12 of the first battery group 17 and a total current output terminal 13 of the second battery group 18 are both connected to the BDU module 2, to allow the first battery group 17 and the second battery group 18 to be connected in series through the BDU module 2.

In this embodiment of this application, the cell 111 may be a short cell or a long cell. It will be noted that the short cell and long cell have clear definitions in this field. A short cell is a cell whose length does not exceed a specific first preset value, and a long cell is a cell whose length exceeds a specific second preset value. The first preset value and second preset value may be equal or unequal, and the first preset value may even be greater than the second preset value. For example, the length of the short cell may be 400 mm to 900 mm, and the length of the long cell may be 600 mm to 1200 mm.

According to the battery pack 100 in this embodiment of this application, the plurality of battery groups 1 are stacked in the first direction, and two adjacent battery groups 1 are connected through the BDU module 2. In this case, the quantity of cells 111 in the battery pack 100 may be increased, to allow the cells 111 to be arranged more compactly in the battery pack 100, improve space utilization of the battery pack 100 in the first direction, and increase an energy density of the battery pack 100, thereby increasing driving range to meet use requirements of users. In addition, this can meet power requirements while allowing the stacked multi-layer battery groups 1 to be connected to each other in the BDU module 2, thereby simplifying high-voltage connection structures of the stacked battery pack 100 and improving safety of the battery pack 100.

In some embodiments of this application, referring to FIG. 5, two adjacent battery groups 1 are connected in series through the BDU module 2. It will be understood that in the two adjacent battery groups 1, a total current input terminal 12 of one battery group 1 is connected to a relay protection module, a total current output terminal 13 of the one battery group 1 is directly connected to a main positive relay of the BDU module 2, a total current output terminal 13 of the other battery group 1 is connected to the relay protection module, and a total current input terminal 12 of the other battery group 1 is directly connected to a main negative relay of the BDU module 2.

Alternatively, two adjacent battery groups 1 are connected in parallel through the BDU module 2. It will be understood that total current input terminals 12 and total current output terminals 13 of the two adjacent battery groups 1 all are directly connected to the BDU module 2. Alternatively, in two adjacent battery groups 1, a total current input terminal 12 and a total current output terminal 13 of one battery group 1 may be connected to a relay protection module, and a total current input terminal 12 and a total current output terminal 13 of the other battery group 1 may be directly connected to a main positive relay or a main negative relay of the BDU module 2.

It will be noted that the relay protection module is a relay other than the main positive relay or the main negative relay. A high-voltage circuit is connected by connecting the relay protection module, the main positive relay, and the main negative relay together. In addition, the high-voltage circuit may be disconnected by disconnecting the relay protection module, by disconnecting the main positive relay and the main negative relay, through a passive disconnection of a fuse of the main negative relay, by disconnecting an integrated active-passive fuse, or by disconnecting a disconnection unit in a main circuit of another BDU module 2.

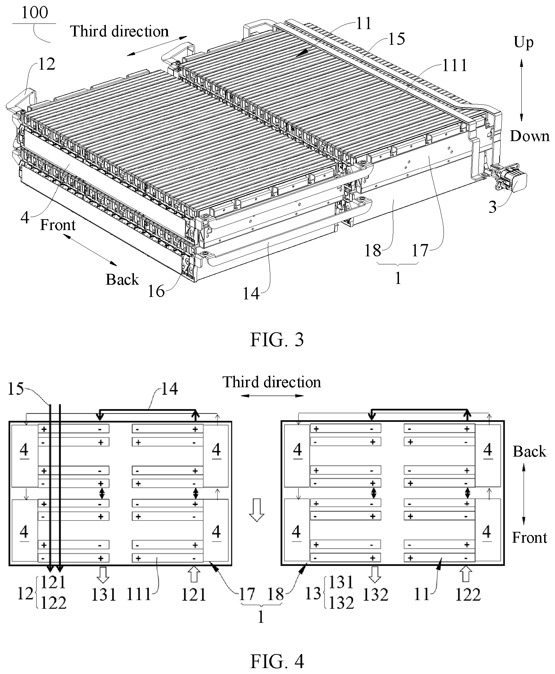

In some embodiments of this application, referring to FIG. 2 and FIG. 3, each battery group 1 includes a plurality of cell groups 11 spaced apart along the third direction (as shown in FIG. 2). Each cell group 11 includes a plurality of cells 111 arranged in the second direction. The third direction, the second direction, and the first direction are perpendicular to each other. In this case, the quantity of cells 111 in the battery pack 100 can be further increased, to allow the cells 111 to be arranged more compactly in the battery pack 100, improve space utilization of the battery pack 100 in the second direction and the third direction, and increase an energy density of the battery pack 100, thereby increasing driving range to meet use requirements of the users.

For example, there may be two, three, four, or five cell groups 11 spaced apart in each battery group 1 along the third direction.

In a specific example, referring to FIG. 2 and FIG. 4, each battery group 1 includes two cell groups 11 spaced apart along the third direction. Each cell group 11 includes a plurality of cells 111 arranged in the second direction. In this case, a quantity of cells 111 in the battery pack 100 can be further increased, to allow the cells 111 to be arranged more compactly in the battery pack 100, improve space utilization of the battery pack 100 in the second direction and the third direction, and increase energy density of the battery pack 100, thereby increasing driving range to meet the use requirements of the users. In some embodiments, a length of each cell 111 may be 400 mm to 900 mm, that is, each cell 111 may be a short cell, and two cell groups 11 in a same battery group 1 are arranged side by side to increase an arrangement density of the cells 111.

Certainly, this application is not limited thereto. Each battery group 1 may alternatively include only one cell group 11, a plurality of cells 111 in the cell group 11 are arranged in a single row. In some embodiments, the length of each cell 111 may be 600 mm to 1200 mm, that is, each cell 111 may be a long cell, so as to increase arrangement density of the cells 111.

In this embodiment of this application, referring to FIG. 4, a plurality of cells 111 in each cell group 11 are connected in series, and a plurality of cell groups 11 in a same battery group 1 are connected in series, so that all cells 111 in the same battery group 1 are connected in series, thereby ensuring a layout of the high-voltage circuit of the battery pack 100.

Specifically, referring to FIG. 1, two adjacent cells 111 in each cell group 11 are connected in series by using a connecting sheet 16. The connecting sheet 16 is located at one end of the cell group 11 along the second direction. Two ends of the connecting sheet 16 in a length direction are respectively connected to positive electrodes or negative electrodes of two adjacent cells 111 in the same cell group 11, thereby connecting the plurality of cells 111 in each cell group 11 in series. Certainly, this application is not limited thereto, and the plurality of cells 111 in each cell group 11 may alternatively be electrically connected through a busbar.

In this embodiment of this application, referring to FIG. 4, each cell 111 has a positive electrode and a negative electrode respectively arranged at both ends of the cell 111 in the third direction. Positive electrodes of two adjacent cells 111 in the same cell group 11 are opposite to each other in the third direction. In this way, a positive electrode and a positive electrode of each cell 111 are located at opposite ends in the third direction, to increase a spacing between different electrodes, prevent a risk of high-voltage arc breakdown, and facilitate arrangement and assembly of the plurality of cells 111, thereby ensuring assembly reliability of the cell 111, and allowing the connecting sheet 16 to connect two adjacent cells 111 in a same cell group 11 in series.

In this embodiment of this application, referring to FIG. 4, each cell 111 has a positive and a negative electrode respectively arranged at both ends of the cell 111 in the third direction. Two adjacent cell groups 11 in the same battery group 1 are respectively a first cell group and a second cell group. A cell 111 of the first cell group and a cell 111 of the second cell group that are opposite each other in the third direction are respectively a first cell and a second cell. Positive electrodes of the first cell and the second cell are opposite to each other in the third direction. This can arrange a total current input terminal 12 and a total current output terminal 13 of the same battery group 1 in a misaligned layout, simplify a design difficulty of the BDU module 2, and reduce a high-voltage risk on the side of the battery group 1 that is close to the BDU module 2, thereby improving safety and reliability of the battery pack 100.

In this embodiment of this application, referring to FIG. 3, two adjacent cell groups 11 in the same battery group 1 are connected by using a first connection busbar 14, so that a quantity of interfaces for electrical connection between the BDU module 2 and a plurality of battery groups 1 can be reduced, to reduce a quantity of cables between the BDU module 2 and the plurality of battery groups 1, thereby reducing risk of high-voltage breakdown. It will be understood that the connecting sheet 16 is used to connect two adjacent cells 111 in the same cell group 11 in series, and the first connection busbar 14 is used to connect two adjacent cell groups 11 in the same battery group 1 in series, so that all cells 111 in the same battery group 1 are connected in series, thereby ensuring a layout of a high-voltage circuit of the battery pack 100. In this embodiment of this application, the first connection busbar 14 is a metal conductive component. For example, a first connection busbar 15 may be a copper busbar, an aluminum busbar, or a copper-aluminum composite component.

In this embodiment of this application, referring to FIG. 1 and FIG. 3, the first connection busbar 14 is located on a side of the battery group 1 that is away from the BDU module 2. First connection busbars 14 corresponding to the plurality of battery groups 1 extend in the same direction, two ends of the first connection busbars 14 in a length direction (referring to the third direction shown in FIG. 3) are flush with each other, and the first connection busbars 14 are oppositely arranged in the first direction. This avoids a cross-layout between the first connection busbars 14 corresponding to the plurality of battery groups 1, ensures sufficient electrical spacing, and effectively reduces electrical safety risks under various safety abuse test conditions, thereby improving safety and reliability of the battery pack 100.

In some embodiments of this application, referring to FIG. 1 and FIG. 2, a total current input terminal 12 and a total current output terminal 13 of each battery group 1 are both located at one end of the battery group 1 that is close to the BDU module 2. This facilitates a connection between the BDU module 2 and the total current input terminal 12 and the total current output terminal 13 of each battery group 1, simplifies cabling between the BDU module 2 and the plurality of battery groups 1, and facilitates layout of a high-voltage circuit of the battery pack 100.

In a specific example, referring to FIG. 1, there are two battery groups 1: a first battery group 17 and a second battery group 18. The first battery group 17 and the second battery group 18 are stacked in the up-down direction, and the first battery group 17 is located above the second battery group 18. The total current input terminal 12 includes a first total current input terminal 121 of the first battery group 17 and a second total current input terminal 122 of the second battery group 18. The total current output terminal 13 includes a first total current output terminal 131 of the first battery group 17 and a second total current output terminal 132 of the second battery group 18. Both the first total current input terminal 121 and the second total current output terminal 132 are connected to the BDU module 2.

In the examples shown in FIG. 4 and FIG. 5, a current flows from the BDU module 2 into one cell group 11 of the second battery group 18 through a second total current input terminal 122 of the second battery group 18, to supply power to the cell 111. Through a connection of a first connection busbar 14 of the second battery group 18, the current flows from the one cell group 11 to an adjacent cell group 11, and then returns to the BDU module 2 through a second total current output terminal 132 of the second battery group 18. The first battery group 17 and the second battery group 18 that are adjacent to each other are connected in series by using the relay protection module in the BDU module 2. The current flows from the relay protection module into one cell group 11 of the first battery group 17 through a first total current input terminal 121 of the first battery group 17, to supply power to the cell 111. Through a connection of a first connection busbar 14 of the first battery group 17, the current flows from the one cell group 11 to an adjacent cell group 11, and then flows back to the BDU module 2 through a first total current output terminal 131 of the first battery group 17. This implements a high-voltage circuit of the battery pack 100, which complies with electrical safety design and ensures safety and reliability of the battery pack 100.

It will be noted that, along the third direction, the first total current input terminal 121 and the second total current output terminal 132 are located between the first total current output terminal 131 and the second total current input terminal 122, to facilitate a connection and assembly between the relay protection module and the first total current input terminal 121 and the second total current output terminal 132, and facilitate a connection between the BDU module and the first total current output terminal 131 and the second total current input terminal 122.

In this embodiment of this application, referring to FIG. 1 and FIG. 3, the battery pack 100 further includes a rear drive high-voltage port 3. The rear drive high-voltage port 3 is provided on a side of the plurality of battery groups 1 that is away from the BDU module 2, and is connected to the BDU module 2 through a second connection busbar 15. An end of the rear drive high-voltage port 3 that is away from the second connection busbar 15 is connected to a rear drive motor control unit. The rear drive motor control unit can be driven through the second connection busbar 15 to provide energy, thereby charging the battery pack 100 through the second connection busbar 15. In combination with a front drive high-voltage port of the battery pack 100, the front drive high-voltage port and the rear drive high-voltage port 3 can both charge the battery pack 100. In addition, arrangement of the second connection busbar 15 can reduce cabling outside the battery pack 100 at a vehicle level, to simplify a layout of vehicle harness, and improve efficiency of mounting and removing the battery pack 100. In this embodiment of this application, the second connection busbar 15 is a metal conductive component. For example, the second connection busbar 15 may be a copper busbar, an aluminum busbar, or a copper-aluminum composite component.

In this embodiment of this application, referring to FIG. 3 and FIG. 4, projections of the first connection busbar 14 and the second connection busbar 15 onto a plane perpendicular to the first direction do not intersect with each other. This allows for proper control of an electrical clearance between the first connection busbar 14 and the second connection busbar 15, to avoid a staggered layout of the first connection busbar 14 and the second connection busbar 15, and keep cabling neat and tidy, thereby reducing a high-voltage risk of the battery pack 100, ensuring electrical safety of the battery pack 100, and improving reliability of EMC (electromagnetic compatibility) testing.

In an embodiment of this application, referring to FIG. 1 and FIG. 4, the battery pack 100 further includes an acquisition circuit board 4 for low-voltage signal acquisition. There are a plurality of acquisition circuit boards 4, and each cell group 11 corresponds to at least one acquisition circuit board 4. Each battery group 1 includes two cell groups 11, and a plurality of acquisition circuit boards 4 corresponding to the same battery group 1 are respectively located on sides of the two cell groups 11 that are away from each other. This increases a distance between the cell 111 and an inner circumferential wall of the battery pack 100, providing specific buffer space during a collision of the battery pack 100, and reducing safety risks of collision and abuse testing.

In some embodiments of this application, referring to FIG. 4, the cells 111 of the plurality of battery groups 1 are arranged in the same layout, which can ensure stacking and assembly consistency of the cells 111, reduce materials required for design and production, avoid increasing requirements for process design and control, and reduce production risks of the battery pack 100, thereby speeding up production cycle and improving production efficiency.

In some embodiments of this application, the BDU module 2 includes the relay protection module. In two adjacent battery groups 1, a total current input terminal 12 of one battery group 1 and a total current output terminal 13 of the other battery group 1 are both connected to the relay protection module, to allow the two adjacent battery groups 1 to be connected to or disconnected from each other through the relay protection module.

Specifically, the relay protection module includes a stationary contact, a moving contact, and a driving member. The stationary contact includes a first stationary contact and a second stationary contact. In the two adjacent battery groups 1, the total current input terminal 12 of the one battery group 1 is electrically connected to the first stationary contact, and the total current output terminal 13 of the other battery group 1 is electrically connected to the second stationary contact. The moving contact can be driven by the driving member and has a first position and a second position. In the first position, the moving contact is in contact with both the first stationary contact and the second stationary contact, and the moving contact is connected to the first stationary contact, the second stationary contact, and the two adjacent battery groups 1. In the second position, the moving contact is spaced apart from at least one of the first stationary contact and the second stationary contact, and the moving contact is disconnected from at least one of the first stationary contact and the second stationary contact.

It will be understood that when the relay protection module receives a high-level signal (with a typical value of 5 V), the driving member drives the moving contact to move toward the stationary contact to the first position. The moving contact is in contact with both the first stationary contact and the second stationary contact, and the moving contact and the stationary contact are connected. The first stationary contact, the moving contact, the second stationary contact, and the two adjacent battery groups 1 are connected, realizing an electrical connection between the two adjacent battery groups 1. When the relay protection module receives a low-level signal (with a typical value of 0 V), a driving voltage of the driving member is disconnected, and the moving contact moves away from the stationary contact to the second position. The moving contact is spaced apart from at least one of the first stationary contact and the second stationary contact, disconnecting the moving contact from the stationary contact and actively disconnecting an electrical connection between the two adjacent battery groups 1. In a thermal runaway event or electrolyte leakage, a current loop cannot be formed, which can slow down fire propagation during thermal runaway to some extent, mitigate severity of thermal runaway, and improve safety and reliability.

In some embodiments of this application, the BDU module 2 has a switch apparatus. In two adjacent battery groups 1, a total current input terminal 12 of one battery group 1 and a total current output terminal 13 of the other battery group 1 are both connected to the switch apparatus, to allow the two adjacent battery groups 1 to be connected to or disconnected from each other through the switch apparatus. This has a simple structure, easy assembly, simpler control logic, and enhanced reliability.

This application further proposes a vehicle having the battery pack 100 described in the foregoing embodiments.

According to the vehicle in this embodiment of this application, the foregoing battery pack 100 is disposed, a plurality of battery groups 1 are stacked in a first direction, and two adjacent battery groups 1 are connected through a BDU module 2. This can meet a power requirement while allowing the stacked multi-layer battery groups 1 to be connected to each other in the BDU module 2, thereby simplifying a high-voltage connection structure of the stacked battery pack 100 and improving safety of the battery pack 100.

The battery pack 100 and other components and operations of the vehicle according to embodiments of this application are known to a person of ordinary skill in the art. Details are not described herein again.

In the descriptions of this specification, reference term such as "one embodiment", "some embodiments", "example", "specific example", or "some examples" means that a specific feature, structure, material or characteristic described with reference to the embodiment or example is included in at least one embodiment or example of this application. In this specification, schematic representations of the foregoing terms do not necessarily refer to a same embodiment or example. The described specific feature, structure, material, or characteristic may be combined in a proper manner in any one or more of embodiments or examples. In addition, a person skilled in the art may combine different embodiments or examples described in this specification and features of different embodiments or examples in a case of no conflict.

Although embodiments of this application have been illustrated and described, a person of ordinary skill in the art will understand that various changes, modifications, substitutions and variations may be made to these embodiments without departing from the principles and purposes of this application, the scope of this application is defined by the claims and any equivalents thereof.

## Claims

1. A battery pack, comprising:
a plurality of battery groups (1), the plurality of battery groups (1) being stacked in a first direction, and each battery group (1) comprising a plurality of cells (111); and
a BDU module (2), the BDU module (2) being disposed on a side of the plurality of battery groups (1) in a second direction, wherein in two adjacent battery groups (1), a total current input terminal (12) of one battery group (1) and a total current output terminal (13) of the other battery group (1) are both connected to the BDU module (2), and the second direction is perpendicular to the first direction.

2. The battery pack according to claim 1, wherein the two adjacent battery groups (1) are connected in series through the BDU module (2); or
the two adjacent battery groups (1) are connected in parallel through the BDU module (2).

3. The battery pack according to claim 1 or 2, wherein each battery group (1) comprises a plurality of cell groups (11) spaced apart along a third direction, each cell group (11) comprises a plurality of cells (111) arranged in the second direction, and the third direction, the second direction and the first direction are perpendicular to each other.

4. The battery pack according to claim 3, wherein the plurality of cells (111) in each cell group (11) are connected in series, and a plurality of cell groups (11) in a same battery group (1) are connected in series.

5. The battery pack according to claim 3, wherein each cell (111) has a positive electrode and a negative electrode respectively arranged at both ends of the cell (111) in the third direction, and positive electrodes of two adjacent cells (111) in a same cell group (11) are opposite to each other in the third direction.

6. The battery pack according to claim 3, wherein each cell (111) has a positive electrode and a negative electrode respectively arranged at both ends of the cell (111) in the third direction, two adjacent cell groups (11) in a same battery group (1) are respectively a first cell group and a second cell group, a cell (111) of the first cell group and a cell (111) of the second cell group that are opposite to each other in the third direction are respectively a first cell and a second cell, and positive electrodes of the first cell and the second cell are opposite to each other in the third direction.

7. The battery pack according to claim 3, wherein two adjacent cell groups (11) in a same battery group (1) are connected through a first connection busbar (14).

8. The battery pack according to claim 7, wherein the first connection busbar (14) is located on a side of the battery group (1) that is away from the BDU module (2), first connection busbars (14) corresponding to the plurality of battery groups (1) extend in a same direction, two ends of the first connection busbars (14) in a length direction are flush with each other, and the first connection busbars (14) are oppositely arranged in the first direction.

9. The battery pack according to any one of claims 1 to 8, wherein a total current input terminal (12) and a total current output terminal (13) of each battery group (1) are both located at one end of the battery group (1) that is close to the BDU module (2).

10. The battery pack according to claim 7, wherein the battery pack (100) further comprises:
a rear drive high-voltage port (3), the rear drive high-voltage port (3) being provided on a side of the plurality of battery groups (1) that is away from the BDU module (2), and being connected to the BDU module (2) through a second connection busbar (15).

11. The battery pack according to claim 10, wherein projections of the first connection busbar (14) and the second connection busbar (15) onto a plane perpendicular to the first direction do not intersect with each other.

12. The battery pack according to claim 3, wherein the battery pack (100) further comprises:
an acquisition circuit board (4), there are a plurality of acquisition circuit boards (4), and each cell group (11) corresponds to at least one acquisition circuit board (4); and
each battery group (1) comprises two cell groups (11), and a plurality of acquisition circuit boards (4) corresponding to a same battery group (1) are respectively located on sides of two cell groups (11) that are away from each other.

13. The battery pack according to any one of claims 1 to 12, wherein the cells (111) of the plurality of battery groups (1) are arranged in a same layout.

14. The battery pack according to any one of claims 1 to 13, wherein the BDU module (2) comprises a relay protection module, and in two adjacent battery groups (1), a total current input terminal (12) of one battery group (1) and a total current output terminal (13) of the other battery group (1) are both connected to the relay protection module, to allow the two adjacent battery groups (1) to be connected to or disconnected from each other through the relay protection module.

15. The battery pack according to any one of claims 1 to 14, wherein the BDU module (2) has a switch apparatus, and in two adjacent battery groups (1), a total current input terminal (12) of one battery group (1) and a total current output terminal (13) of the other battery group (1) are both connected to the switch apparatus, to allow the two adjacent battery groups (1) to be connected to or disconnected from each other through the switch apparatus.

16. A vehicle, comprising the battery pack (100) according to any one of claims 1 to 15.
